# EUROPEAN PATENT APPLICATION

(11) **EP 2 720 498 A1**
(43) Date of publication of application: **16.04.2014**
(21) Application number: 11867649.3
(22) Date of filing: 15.06.2011
(51) Int. Cl.: H04W 48/08

(54) **COMMUNICATION METHOD, RADIO USER EQUIPMENT AND ACCESS NETWROK EQUIPMENT**

(71) Applicant: Huawei Technologies Co., Ltd, Shenzhen, Guangdong 518129 (CN)
(72) Inventor: FANG, Zhipeng, Shenzhen Guangdong 518129 (CN)
(74) Representative: Haley, Stephen
(86) International application number: PCT/CN2011/075768
(87) International publication number: WO 2012/171187

(57) **Abstract**

Embodiments of the present invention disclose a communications method, including: receiving a message that carries priority information and/or data transmission connection behavior information, where the data transmission connection behavior information includes a service type and/or a data packet interval; and performing priority control according to the priority information, and/or performing connection management according to the data transmission connection behavior information. According to the embodiments of the present invention, congestion can be reduced from multiple aspects and occurrence of a signaling storm can be further reduced.

## Description

### TECHNICAL FIELD

The present invention relates to the field of wireless communications technologies, and in particular, to a communications method, a wireless user equipment, and an access network device.

### BACKGROUND

As wireless user equipment applications are popularized and application programs on wireless user equipments become increasingly complex and changeable, frequent light-traffic services are growing. These have a great impact on signaling of an existing network, and cause congestion or even a signaling storm in an overload case.

### SUMMARY

In view of this, an objective of embodiments of the present invention is to provide a communications method, a wireless user equipment, and an access network device, so as to reduce occurrence of congestion or even a signaling storm.

The embodiments of the present invention provide the following technical solutions to attain the foregoing objective:

One aspect of the embodiments of the present invention provides a communications method, including:
receiving a message that carries priority information and/or data transmission connection behavior information, where the data transmission connection behavior information includes a service type and/or a data packet interval; and
performing priority control according to the priority information, and/or performing connection management according to the data transmission connection behavior information.

Another aspect of the embodiments of the present invention provides a communications method, including:
constructing a message that carries priority information and/or data transmission connection behavior information, where the data transmission connection behavior information includes a service type and/or a data packet interval; and
sending the message to an access network device, so that the access network device performs priority control according to the priority information and/or performs connection management according to the data transmission connection behavior information.

Still another aspect of the embodiments of the present invention provides a wireless user equipment, including:
a first message constructing unit, configured to construct a message that carries priority information and/or data transmission connection behavior information, where the data transmission connection behavior information includes a service type and/or a data packet interval; and
a first sending unit, configured to send the message to an access network device, so that the access network device performs priority control according to the priority information and/or performs connection management according to the data transmission connection behavior information.

Still another aspect of the embodiments of the present invention provides an access network device, including:
a receiving unit, configured to receive a message that carries priority information and/or data transmission connection behavior information, where the data transmission connection behavior information includes a service type and/or a data packet interval; and
a processing unit, configured to perform priority control according to the priority information, and/or perform connection management according to the data transmission connection behavior information.

As can be seen from the foregoing technical solutions, a message that carries priority information and/or data transmission connection behavior information is sent to an access network device, so that the access network device can perform priority control by using the priority information. The priority control can control overload from the source, so as to avoid congestion. In addition, the access network device can perform connection management according to the data transmission connection behavior information, and the connection management can also have a positive effect on congestion reduction. Therefore, according to the embodiments of the present invention, congestion can be reduced from multiple aspects and occurrence of a signaling storm can be further reduced.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a communications method according to an embodiment of the present invention;
FIG. 2 is a schematic structural diagram of a user equipment according to an embodiment of the present invention;
FIG. 3 is a schematic flowchart of a communications method according to an embodiment of the present invention;
FIG. 4 is a schematic structural diagram of an access network device according to an embodiment of the present invention;
FIG. 5 is a schematic flowchart of a voice call according to an embodiment of the present invention;
FIG. 6 is a schematic flowchart of a method for setting a DRX parameter according to an embodiment of the present invention;
FIG. 7 is a schematic flowchart of a method for selecting a DRX parameter according to an embodiment of the present invention;
FIG. 8 is a schematic flowchart of a method for setting a timer parameter according to an embodiment of the present invention;
FIG. 9 is a schematic flowchart of a method for setting a Sync2Usync timer according to an embodiment of the present invention; and
FIG. 10 is a schematic flowchart of an access network device according to an embodiment of the present invention.

### DESCRIPTION OF EMBODIMENTS

For purposes of reference and clarity, technical terms, short names or abbreviations used in the following description are summarized as follows:
eNB: E-UTRAN NodeB, evolved base station
LTE: Long Term Evolution, long term evolution
UE: User Equipment, user equipment
RRC: Radio Resource Control, radio resource control
RNC: Radio Network Controller, radio network controller
IM: Instant Messaging, instant messaging
IMEI: International Mobile Equipment Identification Number, international mobile equipment identification number
GPRS: General Packet Radio Service, general packet radio service
MME: Mobility Management Entity, mobility management entity. As a key control node of an LTE access network according to 3GPP protocols, the MME is responsible for procedures of locating and paging a UE in idle mode and relay.
SGSN: SERVING GPRS SUPPORT NODE, serving GPRS support node
TD-SCDMA: Time Division-Synchronous Code Division Multiple Access, time division-synchronous code division multiple access
KPI: key performance index, key performance index, such as a call drop rate or an inter-system handover success rate
KEEP LIVE: Keep live
HEARTBEAT: heartbeat
Core network: a network that connects a service provider to an access network, or connects one access network to another access network. It usually refers to a network portion excluding an access network and a customer premises network.
Inactivity Timer: inactivity timer. This is a timer triggered only once. When this timer is triggered, it indicates that a neighbor does not send any Hello packet within a long period of time and the neighbor is considered to be in an inactive state.
DRX: Discontinuous Reception, discontinuous reception
PS: Packet Switch, packet switching
Short DRX Cycle: short DRX cycle
DRX Short Cycle Timer: DRX short cycle timer
Long DRX Cycle: long DRX cycle
Unsync: non-synchronous
Sync: synchronous
UL: uplink
SRS: Sounding Reference Signal, sounding reference signal
Sync2Usync timer: synchronous/non-synchronous state transition timer

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

With advancement of science and technologies, smart user equipments are more widely applied. Call attempts of a smart user equipment are about dozens of or even hundreds of times that of a common call, and the number of links grows at a rate far higher than data growth. This is caused by the following specific behaviors of the smart user equipment:
1. An Internet application program (such as Facebook, Twitter, Push-mail, MSN/QQ, or another IM application) on the smart user equipment needs to periodically and frequently send a Heartbeat message to maintain IP connectivity.
2. The application program on the smart user equipment also frequently updates information, and periodically initiates a service request to a network in a moving process. For example, the user equipment keeps synchronizing information, such as a mail, an address book, or a calendar (calendar) to a network server.

Multi-task support of the smart user equipment makes the foregoing signaling messages appear more frequently, because each task has a separate signaling message. These have a great impact on signaling of the existing network, and cause congestion or even a signaling storm in an overload case, and a network device can hardly bear such a heavy load. In addition, during burst traffic peak time, highly-frequent signaling impacts also severely affect normal services.

In view of this, an objective of an embodiment of the present invention is to provide a communications method to reduce occurrence of congestion or even a signaling storm.

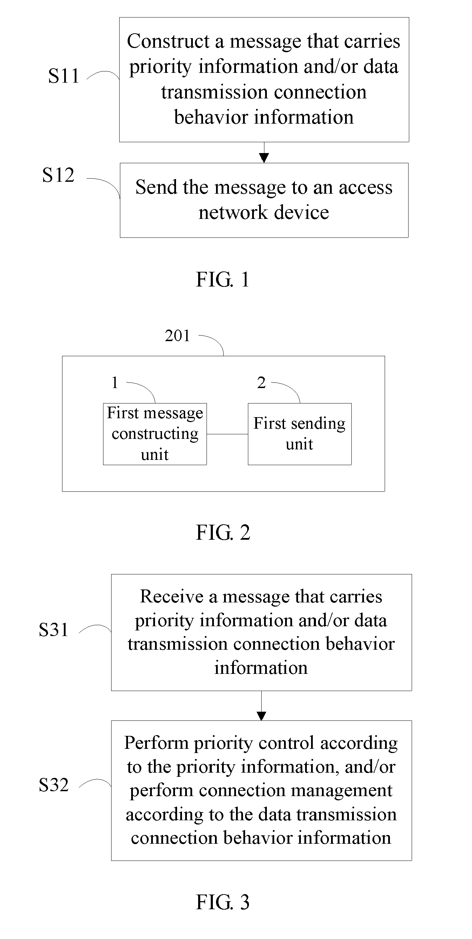

Referring to FIG. 1, the method includes at least the following steps:
S11. Construct a message that carries priority information and/or data transmission connection behavior information, where the data transmission connection behavior information includes a service type and/or a data packet interval.
S12. Send the message to an access network device, so that the access network device performs priority control according to the priority information and/or performs connection management according to the data transmission connection behavior information.

An embodiment of the present invention further provides a wireless user equipment, which corresponds to the foregoing communications method. FIG. 2 shows a structure of the wireless user equipment 201, which includes:
a first message constructing unit 1, configured to construct a message that carries priority information and/or data transmission connection behavior information, where the data transmission connection behavior information includes a service type and/or a data packet interval; and
a first sending unit 2, configured to send the message to an access network device, so that the access network device performs priority control according to the priority information and/or performs connection management according to the data transmission connection behavior information.

An embodiment of the present invention further provides a communications method, which may be applied to an access network device. Referring to FIG. 3, the method includes at least the following steps:
S31. Receive a message that carries priority information and/or data transmission connection behavior information.
S32. Perform priority control according to the priority information, and/or perform connection management according to the data transmission connection behavior information.

The priority information includes one or any combination of service connection cause information, device type information of a user equipment (UE), user priority information, and service priority information.

In another embodiment of the present invention, a specific implementation manner of the priority control may be: deferring or denying access of a low-priority service or a low-priority user equipment according to the priority information.

In specific implementation, an access network may perform the priority control according to the priority information immediately after receiving the priority information; or may perform the priority control when a preset condition (for example, a network load reaches a certain threshold) is reached.

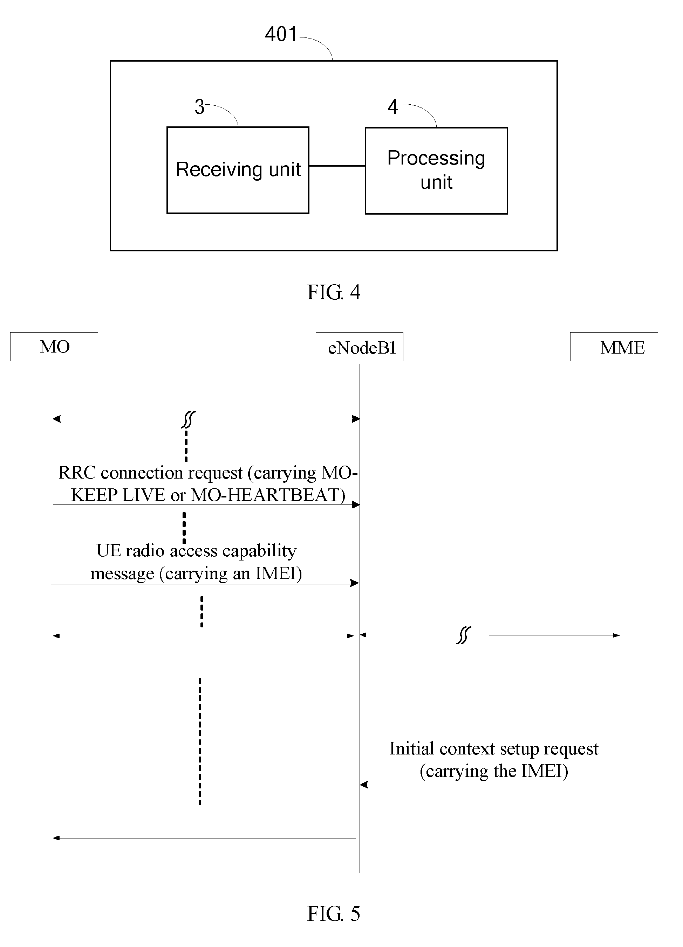

An embodiment of the present invention further provides an access network device, which corresponds to the foregoing communications method. FIG. 4 shows a structure of the access network device 401, which includes:
a receiving unit 3, adapted to receive a message that carries priority information and/or data transmission connection behavior information, where the data transmission connection behavior information includes a service type and/or a data packet interval; and
a processing unit 4, adapted to perform priority control according to the priority information, and/or perform connection management according to the data transmission connection behavior information.

In the foregoing embodiment, the priority information may include one or any combination of service connection cause information, device type information of a user equipment, user priority information, and service priority information; and the data transmission connection behavior information may include a service type and/or a data packet interval.

Optionally, the processing unit 4 is specifically configured to defer or deny access of a low-priority service or a low-priority user equipment according to the priority information.

Optionally, the processing unit 4 is specifically configured to set a discontinuous reception (DRX) parameter according to the data transmission connection behavior information, and/or set a timer parameter according to the data transmission connection behavior information.

Optionally, the processing unit 4 is specifically configured to determine, according to the service type, a service feature of a service accessed by the UE; and when the service feature does not include a frequent small-packet service and meets a condition for entering DRX, configure a synchronous DRX parameter; and/or when the service feature includes a frequent small-packet service, calculate an average sending interval of data packets according to the data packet interval and select a synchronous DRX parameter and/or a non-synchronous DRX parameter according to the interval.

The data packet interval includes a periodical heartbeat packet interval; and the processing unit 4 is further specifically configured to determine, according to the service type, the service feature of the service accessed by the UE; and when the service feature includes the frequent small-packet service, calculate an average heartbeat packet interval according to the periodical heartbeat packet interval; and configure a synchronous/non-synchronous state transition timer parameter according to the average heartbeat packet interval.

The access network device may perform priority control for different priority information according to a preset policy, and/or perform connection management according to the data transmission connection behavior information. The following embodiments of the present invention introduce them in detail one by one. In addition, when most KPIs of a user equipment are poor, the access network side may further extract user equipment information to perform fault diagnosis.

As can be seen from all the foregoing embodiments of the present invention, after a message that carries priority information and/or data transmission connection behavior information is sent to an access network device, the access network device can perform priority control according to the priority information, thereby controlling, from the source, signaling that enters a core network and avoiding congestion. In addition, the access network device can perform connection management according to the data transmission connection behavior information, and the connection management can also have a positive effect on congestion reduction. Therefore, according to the embodiments of the present invention, congestion can be reduced from multiple aspects and occurrence of a signaling storm can be further reduced.

The following illustrates the technical solutions of the present invention by using a more specific example.

Taking a voice call of an LTE system as an example, a typical voice call flow is generally divided into: a mobile-originated flow, a mobile-terminated flow, and a release flow.

In the mobile-originated flow, referring to FIG. 5, a calling user equipment (MO) may send a connection setup request, which is also called an RRC connection request (RRC Connection Request) in an LTE application, to an access network device eNodeB1. According to a current protocol, however, abundant PS service types cannot be differentiated through information carried in the RRC connection request, and an access network cannot identify a message such as a heartbeat message or a periodical service request message of a user equipment through the air interface. Therefore, it is impossible to acquire a service behavior of the user equipment from the access network side through the air interface to perform priority control.

Therefore, in the embodiment of the present invention, the RRC connection request may carry service connection cause information (For example, the service connection cause information may be added to an optional cause field of the RRC connection request). For the mobile-originated flow, the service connection cause information may be MO-KEEP LIVE or MO-HEARTBEAT. Heartbeat information of all preceding application programs such as FACEBOOK and MSN may be expressed by adding MO-HEARTBEAT to the optional cause field of the RRC connection request. In this way, after acquiring the RRC connection request, the access network device may perform priority control according to the service connection cause information, so that a high-priority service is preferentially accessed. A person of ordinary skill in the art may set a priority of a service according to an actual requirement during specific implementation. For example, a priority of MO-KEEP LIVE may be so set as to be higher than that of MO-HEARTBEAT, or certainly may be lower than that of MO-HEARTBEAT, and no further details are provided herein.

In addition, in a TD-SCDMA system, there is also a connection setup request similar to the RRC connection setup request, that is, a connection setup request message (RRC_RRC_CONNECT_REQ). The service connection cause information may also be added to an establishment cause (Establishment cause) parameter of the message, so that the access network device performs the priority control.

After sending the connection setup request, particularly, in a TD-SCDMA system, the MO may further send a connection setup completion message to the eNodeB1, where the connection setup completion message may carry device type information of the caller.

Referring to FIG. 5 again, in an LTE application, a field may be extended in a UE Radio Access Capability (UE Radio Access Capability) message, so as to carry the device type information of the caller.

In this way, after acquiring the device type information of the caller, the access network device may perform the priority control according to the information.

In addition to wireless user equipments, a core network itself may store device type information. Therefore, referring to FIG. 5 again, in another embodiment of the present invention, the core network may actively notify an access network device of device type information of a wireless user equipment. During LTE implementation, the device type information of the caller may be carried in an initial context setup request (Initial context setup Request) sent by an MME of the core network to the eNodeB1.

No matter whether the information is sent by the wireless user equipment to the access network device or is sent by a core network device to the access network device, ultimately the access network device can receive the device type information of the caller, so that the access network device can perform the priority control according to the information.

The device type information may be a globally-unique device identity of the wireless user equipment, and its length may be 16 bits. For each user equipment delivered from a factory, a unique numerical value may be allocated as a device identity of the user equipment. The access network device extracts the device identity and then may perform the priority control according to the device identity.

In addition, an IMEI may also serve as device type information. The IMEI includes a TAC, an FAC, an SNR, and an SP, totaling 15 digits. The TAC with the first six digits represents a type assembly code allocated by an European type standards center; the FAC with the next two digits represents a factory assembly code; the SNR with the next six digits represents a product serial number and is used to distinguish between mobile devices with a same TAC and a same FAC; and the last one-digit SP is a reserved code. IMEIs correspond to user equipments one by one, and this code is globally unique. After receiving the IMEI, the access network device may also perform the priority control according to a preset policy.

The foregoing introduces specific and different priority information corresponding to different messages at different stages of the mobile-originated flow. The following introduces specific priority information involved in the mobile-terminated flow.

In the mobile-terminated flow, priority information of the caller and/or a called party, such as user priority information and/or service priority information, may be carried in paging (Paging) signaling. User priorities may be classified into several levels (such as Gold, Silver, and Bronze), and may be described by occupying three bits of the signaling. Service priorities may also be classified into several levels (such as Video, FTP, MSN, and HTTP), and may be described by occupying eight bits of the signaling. The access network device may perform the priority control (For example, a high-priority service such as a video service may be preferentially accessed) according to such information.

Certainly, although according to the foregoing description, different priority information is carried in different messages at different stages of the voice call flow. This, however, is exemplary only. For a certain stage, it shall not be construed that only the priority information provided in the foregoing embodiments of the present invention can be carried. Instead, a person of ordinary skill in the art may flexibly perform combination as necessary. For example, the paging signaling may carry the device type information of the caller and/or device type information of the called party; and priority information carried in the connection setup request may also be device type information or the like, and no further details are provided herein.

After a connection is set up between the caller and the called party, data transmission (simply called data transmission) starts between the caller and the called party. A UE may construct a message that carries data transmission connection behavior information and sends the message to the access network device. The user data transmission connection behavior information may include the following information: a service type (such as VoIP, VOD, WEB, FTP, GAME, MSN, QQ, FACEBOOK, or TWITTER) and/or a data packet interval (For example, the data packet interval may include a non-heartbeat data packet interval and a periodical heartbeat packet interval). The data packet interval is statistically measured by the UE according to data packet sending.

The access network device may perform connection management according to the data transmission connection behavior information. In an LTE application, the connection management may be specifically: setting a DRX parameter and/or a timer parameter.

The following uses two examples for description:

### 1. Set the DRX parameter.

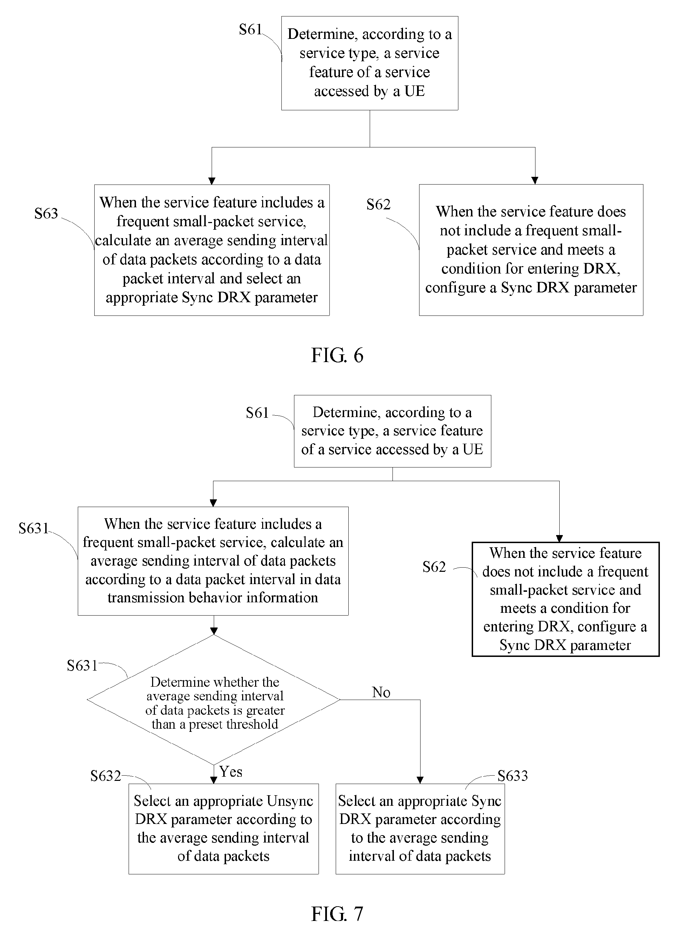

Referring to FIG. 6, steps are as follows:
S61. Determine, according to the service type, a service feature of a service accessed by the UE.
S62. When the service feature does not include a frequent small-packet service and meets a condition for entering DRX, configure a Sync DRX parameter (synchronous DRX parameter). In specific implementation, an average sending interval of data packets may be calculated according to the data transmission data packet interval in the data transmission behavior information, and an appropriate Sync DRX parameter is selected according to the interval.
S63. When the service feature includes the frequent small-packet service, calculate an average sending interval of data packets according to the data packet interval in the data transmission behavior information and select an appropriate DRX parameter according to the interval.

Referring to FIG. 7, step S63 further includes the following steps:
S631. When the service feature includes the frequent small-packet service, calculate the average sending interval of data packets according to the data packet interval in the data transmission behavior information.
S632. Determine whether the average sending interval of data packets is greater than a preset threshold (such as 160 ms), and if yes, go to step S633; or if not go to step S634.
S633. Select an appropriate Unsync DRX parameter (non-synchronous DRX parameter) according to the average sending interval of data packets, so that the terminal enters a longer inactivity period to save electric energy.
S634. Select an appropriate Sync DRX parameter according to the average sending interval of data packets, so that user experience is not affected.

### 2. Set the timer parameter.

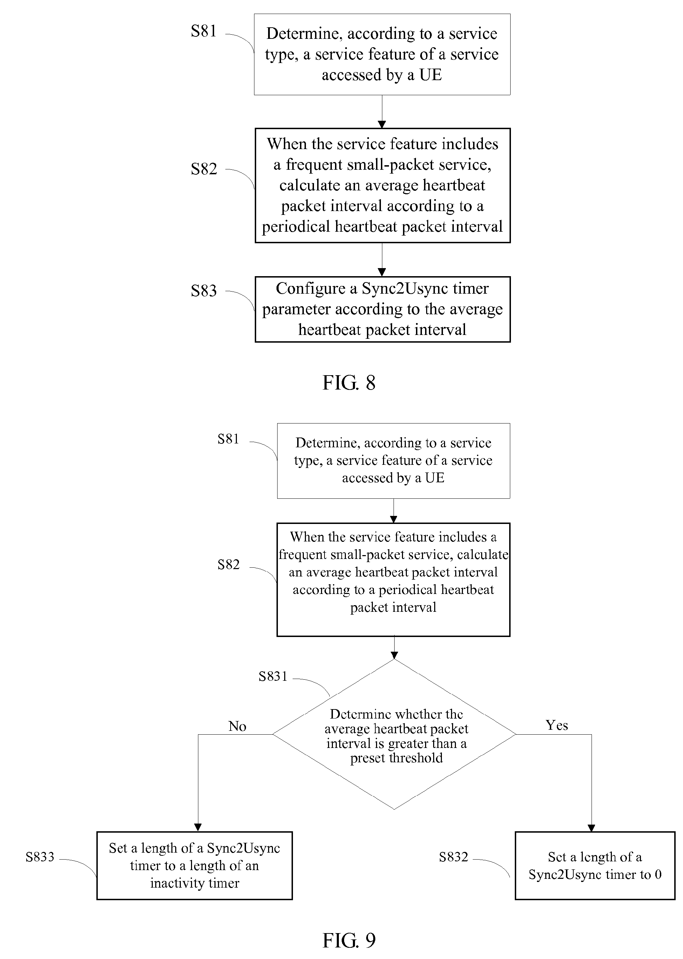

Referring to FIG. 8, the process is as follows:
S81. Determine, according to the service type, a service feature of a service accessed by the UE.
S82. When the service feature includes the frequent small-packet service, calculate an average heartbeat packet interval according to the periodical heartbeat packet interval.
S83. Configure a Sync2Usync timer parameter according to the average heartbeat packet interval.

Referring to FIG. 9, step S83 specifically includes the following steps:
S831. Determine whether the average heartbeat packet interval is greater than a preset threshold, and if yes, go to step S832; or if not, go to step S833.
S832. Set a length of a Sync2Usync timer to 0.

After the Sync2Usync timer is set to 0, a network side does not maintain uplink synchronization of the UE through SRS. When the UE needs to send data, the uplink synchronization is performed in a random channel access manner. This may save an SRS overhead and reduce power consumption of the UE (This is because a longer DRX cycle may be configured if the uplink synchronization is not maintained through SRS, thereby more effectively saving power).
S833. Set the length of the Sync2Usync timer to a length of an inactivity timer.

The preceding length needs to be greater than a maximum periodical interval of a heartbeat packet.

Because a user equipment is often in a moving status, a scenario where handover is required may occur. In this case, in another embodiment of the present invention, the access network device may construct a message that carries the priority information or carries the data transmission connection behavior information; and the message is sent by the source access network device to a target device (such as a target access network device).

The handover is classified into two types: intra-system handover and inter-system handover. Here, an LTE application is still used as an example.

In an intra-system handover scenario, the source access network device may construct a handover request (handover request) that carries the priority information or carries the data transmission connection behavior information (the priority information may come from the UE or the core network, and the data transmission connection behavior information comes from the UE), and transfer the request through an X2 or S1 interface to a target eNB (in LTE, the S1 interface is a communications interface between an eNB and a packet core network, and the X2 interface is a communications interface between one eNB and another eNB).

In an inter-system handover scenario, the source access network device may construct a handover request that carries the priority information or carries the data transmission connection behavior information, and transfer the request to the core network. Then the core network carries such information and transfers such information to a target device (such as a target access network device).

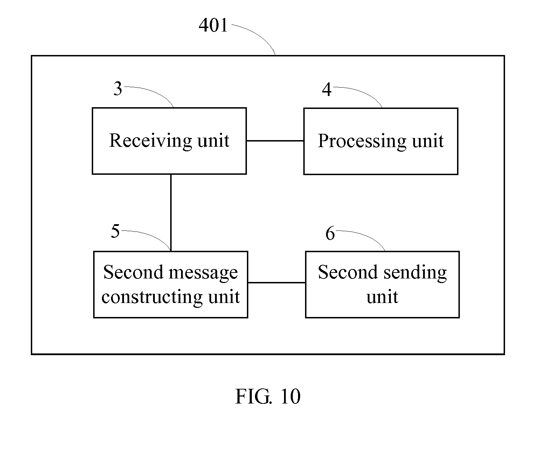

Accordingly, referring to FIG. 10, the access network device 401 in the preceding embodiment may further include:
a second message constructing unit 5, configured to construct a message that carries the priority information and/or the data transmission connection behavior information; and
a second sending unit 6, configured to send, when a handover operation is being performed, send the message constructed by the second message constructing unit to a target device, where the target device may be a target access network device relative to a source access network device during the handover.

The access network device may be a base station device.

It should be pointed out that the foregoing embodiments are merely exemplary embodiments of the present invention, a person of ordinary skill in the art may design more embodiments on this basis, and no further details are provided herein.

It should be noted that each embodiment in this specification is described in a progressive manner. Every embodiment illustrates in emphasis what is different from the other embodiments. The same or similar parts in the embodiments are just references to each other.

A person of ordinary skill in the art may appreciate that, in combination with the examples described in the embodiments disclosed in this specification, units and algorithm steps may be implemented by electronic hardware, computer software, or a combination thereof. In order to clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to the corresponding process in the foregoing method embodiments, and no further details are provided herein.

In the several embodiments provided in the present application, it should be understood that the disclosed system, apparatus, and method may be implemented in other manners. For example, the described apparatus embodiment is merely exemplary. For example, the unit division is merely logical function division and may be other division manners in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The preceding description disclosed in the embodiments allows a person skilled in the art to implement or use the present invention. Multiple modifications to these embodiments are apparent for a person skilled in the art. The general principle defined in this specification may be implemented in other embodiments without departing from the spirit or scope of the present invention. Therefore, the present invention will not be limited to the embodiments described in this specification but extends to a widest scope that complies with the principle and novelty disclosed in this specification.

## Claims

1. A communications method, comprising:
receiving a message that carries priority information and/or data transmission connection behavior information, wherein the data transmission connection behavior information comprises a service type and/or a data packet interval; and
performing priority control according to the priority information, and/or performing connection management according to the data transmission connection behavior information.

2. The method according to claim 1, wherein the priority information comprises one or any combination of service connection cause information, device type information of a user equipment (UE), user priority information, and service priority information.

3. The method according to claim 1 or 2, wherein the performing priority control according to the priority information comprises: deferring or denying an access of a low-priority service or a low-priority user equipment according to the priority information.

4. The method according to any one of claims 1 to 3, wherein:
the performing connection management according to the data transmission connection behavior information comprises: setting a discontinuous reception (DRX) parameter according to the data transmission connection behavior information, and/or setting a timer parameter according to the data transmission connection behavior information.

5. The method according to claim 4, wherein the setting the DRX parameter according to the data transmission connection behavior information comprises:
determining, according to the service type, a service feature of a service accessed by the UE; and
when the service feature does not comprise a frequent small-packet service and meets a condition for entering DRX, configuring a synchronous DRX parameter; and/or
when the service feature comprises a frequent small-packet service, calculating an average sending interval of data packets according to the data packet interval and selecting a synchronous DRX parameter and/or a non-synchronous DRX parameter according to the average sending interval.

6. The method according to claim 4 or 5, wherein the data packet interval comprises a periodical heartbeat packet interval, and the setting a timer parameter according to the data transmission connection behavior information comprises:
determining, according to the service type, the service feature of the service accessed by the UE;
when the service feature comprises the frequent small-packet service, calculating an average heartbeat packet interval according to the periodical heartbeat packet interval; and
configuring a synchronous/non-synchronous state transition timer parameter according to the average heartbeat packet interval.

7. The method according to any one of claims 1 to 6, further comprising:
constructing a message that carries the priority information and/or the data transmission connection behavior information; and
when a handover operation is being performed, sending the constructed message to a target device.

8. A communications method, comprising:
constructing a message that carries priority information and/or data transmission connection behavior information, wherein the data transmission connection behavior information comprises a service type and/or a data packet interval; and
sending the message to an access network device, so that the access network device performs priority control according to the priority information and/or performs connection management according to the data transmission connection behavior information.

9. The communications method according to claim 8, wherein the priority information comprises one or any combination of service connection cause information, device type information of a user equipment, user priority information, and service priority information.

10. The communications method according to claim 8 or 9, wherein the message is specifically a radio resource control connection request, and the priority information is specifically the service connection cause information;
or
the message is specifically a user equipment radio access capability message, and the priority information is specifically the device type information;
or
the message is specifically an initial context setup request, and the priority information is specifically the device type information;
or
the message is specifically paging signaling; and the priority information is specifically at least one of the device type information, the user priority information, and the service priority information.

11. The communications method according to claim 8 or 9, wherein the message is specifically a handover request.

12. A wireless user equipment, comprising:
a first message constructing unit, configured to construct a message that carries priority information and/or data transmission connection behavior information, wherein the data transmission connection behavior information comprises a service type and/or a data packet interval; and
a first sending unit, configured to send the message to an access network device, so that the access network device performs priority control according to the priority information and/or performs connection management according to the data transmission connection behavior information.

13. An access network device, comprising:
a receiving unit, configured to receive a message that carries priority information and/or data transmission connection behavior information, wherein the data transmission connection behavior information comprises a service type and/or a data packet interval; and
a processing unit, configured to perform priority control according to the priority information, and/or perform connection management according to the data transmission connection behavior information.

14. The device according to claim 13, wherein the priority information comprises one or any combination of service connection cause information, device type information of a user equipment (UE), user priority information, and service priority information.

15. The device according to claim 13 or 14, wherein:
the processing unit is specifically configured to defer or deny an access of a low-priority service or a low-priority user equipment according to the priority information.

16. The device according to any one of claims 13 to 15, wherein:
the processing unit is specifically configured to set a discontinuous reception (DRX) parameter according to the data transmission connection behavior information, and/or set a timer parameter according to the data transmission connection behavior information.

17. The device according to claim 16, wherein the processing unit is specifically configured to determine, according to the service type, a service feature of a service accessed by the UE; and when the service feature does not comprise a frequent small-packet service and meets a condition for entering DRX, configure a synchronous DRX parameter; and/or when the service feature comprises a frequent small-packet service, calculate an average sending interval of data packets according to the data packet interval and select a synchronous DRX parameter and/or a non-synchronous DRX parameter according to the interval.

18. The device according to claim 16 or 17, wherein the data packet interval comprises a periodical heartbeat packet interval; and
the processing unit is further specifically configured to determine, according to the service type, the service feature of the service accessed by the UE; when the service feature comprises the frequent small-packet service, calculate an average heartbeat packet interval according to the periodical heartbeat packet interval; and configure a synchronous/non-synchronous state transition timer parameter according to the average heartbeat packet interval.

19. The device according to any one of claims 13 to 18, further comprising:
a second message constructing unit, configured to construct a message that carries the priority information and/or the data transmission connection behavior information; and
a second sending unit, configured to: when a handover operation is being performed, send the message constructed by the second message constructing unit to a target device.
